# EUROPÄISCHE PATENTSCHRIFT

(11) **EP 0 904 242 B1**
(45) Veröffentlichungstag und Bekanntmachung des Hinweises auf die Patenterteilung: **16.02.2000**
(21) Anmeldenummer: 97920659.6
(22) Anmeldetag: 11.04.1997
(51) Int. Cl.: B65G 21/20

(54) **VORRICHTUNG ZUM TRANSPORT VON FLACHEN, INSBESONDERE PLATTENFÖRMIGEN GEGENSTÄNDEN**
DEVICE FOR TRANSPORTING FLAT, ESPECIALLY PLATE-LIKE OBJECTS
DISPOSITIF POUR TRANSPORTER DES ARTICLES PLATS, SE PRESENTANT NOTAMMENT SOUS FORME DE PLAQUES

(30) Priorität: 15.04.1996 DE 19614742; 15.04.1996 DE 19614741
(43) Veröffentlichungstag der Anmeldung: 31.03.1999
(73) Patentinhaber: Tridelta Magnetsysteme GmbH, 44287 Dortmund (DE)
(72) Erfinder: JANZEN, Klaus, D-44534 Lünen (DE); WAGNER, Wolfgang, D-63543 Neuberg (DE); KELLER, Berthold, D-99094 Erfurt (DE); WORM, Karl-Heinz, D-99097 Erfurt (DE)
(74) Vertreter: Patentanwälte Meinke, Dabringhaus und Partner
(86) Internationale Anmeldenummer: EP9701822
(87) Internationale Veröffentlichungsnummer: WO9738927

(56) Entgegenhaltungen:
- DE-A- 3 908 279
- US-A- 3 676 979
- US-A- 3 710 532
- US-A- 3 802 699
- US-A- 3 998 448

## Beschreibung

Die Erfindung betrifft eine Vorrichtung zum Transport von flachen, insbesondere plattenförmigen Gegenständen nach dem Oberbegriff des Patentanspruches 1.

Eine solche Vorrichtung ist aus US-A-3,802,699 bekannt. Diese Vorrichtung weist zum aufliegenden Transport von Gegenständen ein kombiniertes Vakuum-Magnet-System auf, bei dem das Vakuum- und das Magnetsystem parallel angeordnet sind, um sowohl magnetische als auch nichtmagnetische Gegenstände transportieren zu können. Dabei sind die Magneten des Magnetsystems im Transportbandkörper angeordnet, und zwar seitlich vom Transportband, um zu vermeiden, daß die Förderbewegung des Transportbandes durch die Magnetkraft zwischen den Magneten und den zu transportierenden Gegenständen behindert wird. Dies führt dazu, daß die bekannte Vorrichtung relativ aufwendig und insbesondere platzaufwendig ist.

Aus DE-A-21 64 859 ist eine Vorrichtung zum hängenden Transport von Gegenständen bekannt, die als Transportband einen Flachriemen aufweist, welcher mit einer Vakuumprofilierung versehen ist, wobei die zu transportierenden Gegenstände mittels Vakuum an den Flachriemen gepreßt bzw. gesaugt werden. Um Leckstellen des Vakuum-Systems weitgehend zu vermeiden und die Gegenstände fest und wirksam zu ergreifen, weist die bekannte Vorrichtung eine Vakuum-Kammer mit einer glatten Unterseite auf, in der ein länglicher Schlitz ausgebildet ist. Unterhalb der Unterseite der Vakuum-Kammer ist zunächst ein Grundband mit unter Abstand voneinander angeordneten Öffnungen vorgesehen, die sich bei Bewegung des Grundbandes direkt unter dem länglichen Schlitz der Vakuum-Kammer befinden. Dieses Grundband besitzt auf seiner Unterseite eine Schicht aus elastischem Material mit Öffnungen, die den Öffnungen des eigentlichen, als Flachriemen ausgebildeten Transportbandes entsprechen, aber größer als diese sind und Saugköpfe ausbilden, mit denen die flachen Gegenstände durch das Transportband unter der Wirkung des Unterdruckes in der Vakuum-Kammer ergriffen werden. Trotz dieses Aufbaus ist bei dieser Vorrichtung ein Schlupf unvermeidlich, was zu einer eingeschränkten Positioniergenauigkeit führt, was insbesondere bei hohen Transportgeschwindigkeiten und Beschleunigungen von Nachteil ist. Außerdem läßt sich beim Transport von schwereren Gegenständen nicht vermeiden, daß das Förderband wenigstens teilweise nach unten durchhängt, was die Funktionsfähigkeit des Vakuum-Systems beeinträchtigt.

Eine solche Vorrichtung ist auch aus DE-U-295 15 857 bekannt. Diese Vorrichtung weist einen umlaufenden Flachriemen auf, der mit mit einer Vakuumquelle verbundenen Saugnäpfen ausgerüstet ist, auf denen die Gegenstände aufliegen. Derartige Vorrichtungen mit Flachriemen mit Vakuum-System sind grundsätzlich zum Transport von nicht-magnetischen Gegenständen geeignet. Die Vakuumabdichtung bei derartigen Flachriemen kann nach dem Einschalten der Vakuumquelle aufgrund des Riemenaufbaus jedoch nicht automatisch erfolgen, was zu einer Verzögerung der Vakuumwirkung nach dem Einschalten führt. Der Flachriemen selbst kann aufgrund seines Aufbaus Schlupf haben, was zu einer eingeschränkten Positioniergenauigkeit führt, was sich insbesondere bei hohen Transportgeschwindigkeiten und Beschleunigungen nachteilig auswirkt.

Aus DE-A-41 05 388 ist eine Vorrichtung zum Ergreifen und Transportieren von Gegenständen mit einer Anzahl von plattenförmigen zu einer umlaufenden Förderkette zusammengefaßten Trägern bekannt, bei der jeder Träger auf seiner Transportseite mindestens eine Ansaugöffnung aufweist, die mindestens über einen Teil des Transportweges mit einem zur Atmosphäre hin luftdicht abschließbaren, feststehenden Saugkanal in Verbindung steht, der zu einer Vakuumquelle führt und bei der die Träger in Führungsschienen verstellbar geführt sind, die die parallel zur Transportrichtung verlaufenden Kantenbereiche der Träger aufnehmen. Diese Vorrichtung ist relativ aufwendig, da die Transporteinrichtung aus einer Mehrzahl von zusammenzusetzenden einzelnen Trägern besteht. Eine ähnliche Vorrichtung ist aus DE-C-37 01 564 bekannt.

Aus DE-A-39 37 668 ist eine Fördervorrichtung zum aufliegenden Transport von Gefäßen bekannt, welche als Plattenbandförderer ausgebildet ist. Dabei wird durch Anordnung von Saugkanälen zwischen dem Ober- und Untertrum eine Unterdruckförderebene vorgesehen, wobei die an den Verbindungsstellen der einzelnen Platten der Plattenbandkette vorhandenen Zwischenräume die Ansaugöffnungen für den Ansaugkanal bilden. Diese Vorrichtung ist insbesondere zum aufliegenden Transport leichter Kunststoffflaschen oder dergl. ausgebildet und zum hängenden Transport von insbesondere schweren Gegenständen nicht geeignet.

Aus DE-A-39 08 279 ist eine Halte- bzw. Haftvorrichtung bekannt, die zum Anheben und/oder Verschwenken von Gegenständen dient, jedoch nicht als Transportvorrichtung im Sinne eines Transportbandes ausgebildet und geeignet ist. Die Halte- bzw. Haftvorrichtung kann als Halte- bzw. Hafteinrichtung sowohl magnetische Elemente als auch Saugeinrichtungen aufweisen.

Aus DE-A-42 10 188 ist eine Fördervorrichtung zum aufliegenden Transport von Gütern entlang einer vorgegebenen Förderlinie bekannt, welche wenigstens ein die Förderlinie definierendes Führungselement aufweist, auf dem Transportträger geführt sind, die so ausgebildet sind, daß auf diese Güter aufgelegt oder an diesen gehalten werden können. Im Bereich des Führungselementes ist ein umlaufendes Antriebselement vorgesehen, an welches die Transportträger ankoppelbar sind, wobei das umlaufende Antriebselement aus magnetisierbarem Material besteht und die Transportträger ein Magnetkoppelelement aufweisen, das mit dem magnetisierbaren Material des Antriebselementes in Wechselwirkung tritt, an diesem haftet und den zugehörigen Transportträger damit an das umlaufende Antriebselement koppelt. Diese Vorrichtung ist offensichtlich nur zum aufliegenden Transport von Gütern geeignet, welche auf die Transportträger aufgelegt bzw. an diesen befestigt werden.

Beispielsweise aus DE-A-19 30 896 und DE-C-25 54 046 sind zum Transport von ferromagnetischen Gegenständen Magnetförderer bekannt, bei denen in den Transportbandkörper des Transportbandes Magnet-Systeme integriert sind, die aufgrund der magnetischen Wirkung auf die Gegenstände ein Anhaften derselben am Transportband gewährleisten. Eine solche Vorrichtung ist jedoch nur zum hängenden Transport von ferromagnetischen Gegenständen geeignet, nicht-magnetische Gegenstände lassen sich mit einer solchen Vorrichtung nicht transportieren. Ein weiterer derartiger Magnetförderer ist aus DE-A-31 47 414 bekannt. Dieser Förderer weist über die Polfläche der Haltemagnete hervorstehende Rollkörper entlang des Förderweges auf, an denen die zu transportierenden ferromagnetischen Gegenstände anliegen sowie eine Schleppeinrichtung, die die Werkstücke entlang des Förderweges mitnehmen, wobei die Werkstücke somit nur an den Rollkörpern, nicht jedoch an einem Förderband, anliegen, wodurch die Reibung und damit der Verschleiß reduziert werden soll.

Aufgabe der Erfindung ist es, eine gattungsgemäße Vorrichtung so weiterzuentwickeln, daß ein hängender oder aufliegender Transport von magnetischen und nicht-magnetischen flachen, insbesondere plattenförmigen Gegenständen mit hohen Geschwindigkeiten und Beschleunigungen ermöglicht wird, wobei mit derselben Vorrichtung beim hängenden Transport auch ein positionsgenaues Ablegen von Gegenständen möglich sein soll.

Diese Aufgabe wird mit einer Vorrichtung mit den Merkmalen des Patentanspruches 1 gelöst.

Mit der Erfindung wird eine Transportvorrichtung zur Verfügung gestellt, die einen hängenden oder aufliegenden Transport und eine Positionierung von flachen, insbesondere plattenförmigen Gegenständen ohne Verrutschen derselben mit hohen Geschwindigkeiten und Beschleunigungen ermöglicht, wobei die Gegenstände sowohl aus ferromagnetischen Materialien (z.B. ferromagnetische Bleche) als auch aus nicht ferromagnetischen Materialien (z.B. Aluminiumbleche oder Kunststoffplatten) bestehen können. Es ist somit möglich, mit nur einer Transportvorrichtung Gegenstände aus unterschiedlichen Materialien zu befördern und zu positionieren, wobei dies sogar gleichzeitig erfolgen kann. Bei dieser Betriebsweise ist dann sowohl das Vakuumsystem als auch das Magnetsystem in Funktion, was zu einer besonders guten Andrückung der Gegenstände an die Transportbandoberfläche führt. Werden nur ferromagnetische Gegenstände transportiert, ist es im einzelnen Fall selbstverständlich auch möglich, das Vakuumsystem zeitweise zu deaktivieren. Dabei wird ein kompakter Aufbau der Vorrichtung erreicht, so daß der Raumbedarf des Transportbandkörpers nicht wesentlich größer als derjenige von bekannten Vorrichtungen mit reinen Magnet-Systemen ist.

Zum hängenden Transport ist besonders vorteilhaft vorgesehen, daß mehrere in Transportrichtung gesehen hintereinander angeordnete Vakuum-Magnet-Systeme vorgesehen sind. Durch unterschiedliche Aktivierung bzw. Deaktivierung der einzelnen Vakuum-Magnet-Systeme ist es so möglich, Teilbereiche des Transportbandes so zu deaktivieren, daß der in diesen Bereichen befindliche Gegenstand positionsgenau abgelegt wird, während das Transportband in anderen Bereichen funktionsfähig ist, d.h. es können Gegenstände transportiert und in einem anderen Bereich des Transportbandes abgelegt bzw. abgeworfen werden. Ganz besonders vorteilhaft ist es, daß mit diesem System durch Ausschalten der Magnetsysteme ferromagnetische Gegenstände von nicht ferromagnetischen Gegenständen getrennt werden können.

Um die Wirkung der Magnet-Systeme auf die zu transportierenden Gegenstände zu erhöhen, ist vorgesehen, daß jeder Magnet mit Führungsleisten versehen ist, die als Führungen für das Transportband ausgebildet sind.

Die Führungsleisten sind dabei vorzugsweise als Bestandteil des jeweiligen Vakuum-Systems ausgebildet, wozu vorgesehen ist, daß die Führungsleisten die dem Transportband zugewandte Oberfläche des Magneten abdecken und mit den Saugleitungen verbundene Saugöffnungen aufweisen.

Besonders vorteilhaft ist vorgesehen, daß das Transportband von wenigstens einem vorzugsweise mit ferromagnetischen Einlagen versehenen Zahnriemen gebildet ist, der in den entsprechend gestalteten Führungsleisten geführt ist. Durch die Verwendung eines solchen Zahnriemens läßt sich eine besonders gute Vakuumabdichtung erreichen, da zum einen der Zahnriemen durch die formschlüssige Führung in den von den Führungsleisten gebildeten Führungen positioniert wird und zum anderen aufgrund des Vakuum-Systems an die Führungsleisten angedrückt wird. Außerdem wird der Zahnriemen aufgrund seiner ferromagnetischen Einlagen von den Magneten angezogen, so daß einem Durchhängen des Zahnriemens wirksam entgegengewirkt wird. Weiterhin ermöglicht die Verwendung eines solchen Zahnriemens dadurch, daß die Zähne kraftschlüssig mit dem Antriebsrad verbunden sind, eine besonders hohe Positioniergenauigkeit.

Zur Optimierung des Vakuum-Systems ist vorteilhaft vorgesehen, daß die Führungsleisten wenigstens einen rinnenförmigen mit einer Dichtfläche versehenen Ansaugkanal aufweisen, welcher von dem in diesem Bereich Ansaugöffnungen aufweisenden Zahnriemen ober- bzw. unterseitig abgedeckt ist.

Ganz besonders vorteilhaft ist vorgesehen, daß die Ansaugöffnungen des Zahnriemens innenseitig mit Dichtlippen versehen sind, die den rinnenförmigen Ansaugkanal der Führungsleisten randseitig dichtend abdecken. Durch diese Ausgestaltung wird erreicht, daß bei Einschalten der Vakuumquelle eine weitgehend selbsthaltende Vakuumabdichtung erzeugt wird. Die Reibkräfte bleiben beherrschbar und sind weitgehend unabhängig von der Zahl des mit Gegenständen beaufschlagten Transportbandes. Eine spezielle zusätzliche formschlüssige Führung des Zahnriemens auf der Dichtfläche ist nicht erforderlich.

Das Vakuumsystem läßt sich vorteilhaft noch dadurch optimieren, daß der Zahnriemen auf seiner den Gegenständen zugewandten Seite mit einer Mehrzahl von hintereinander angeordneten ringförmigen Erhebungen versehen ist, an denen die Gegenstände anliegen und welche in Verbindung mit den Ansaugöffnungen des Zahnriemens Haltekammern für die Gegenstände bilden. Diese Haltekammern werden dann dichtend von den zu transportierenden Gegenständen abgedeckt, so daß die Vakuumverluste gering gehalten werden können.

Ferner ist vorteilhaft vorgesehen, daß die Dichtlippen derart ausgebildet sind, daß sie einen Verteilerkanal bilden, über den die mit dem Zahnriemen beweglichen Ansaugöffnungen mit den stationären Saugöffnungen kontinuierlich verbunden sind. Außerdem können die Ansaugöffnungen als Drosseln ausgebildet sein.

Die Erfindung ist nachstehend anhand der Zeichnung beispielsweise näher erläutert. Diese zeigt in:
- Fig. 1: einen Querschnitt durch eine erfindungsgemäße Vorrichtung zum hängenden Transport,
- Fig. 2: einen Schnitt gemäß der Linie II-II in Fig. 1 und
- Fig. 3: einen Querschnitt durch eine erfindungsgemäße Vorrichtung zum aufliegenden Transport.

Eine Vorrichtung zum hängenden Transport von flachen, insbesondere plattenförmigen Gegenständen, wie Blechen, ist in der Zeichnung allgemein mit 1 bezeichnet. Ein blechförmiger Gegenstand ist teilweise dargestellt und mit 2 bezeichnet.

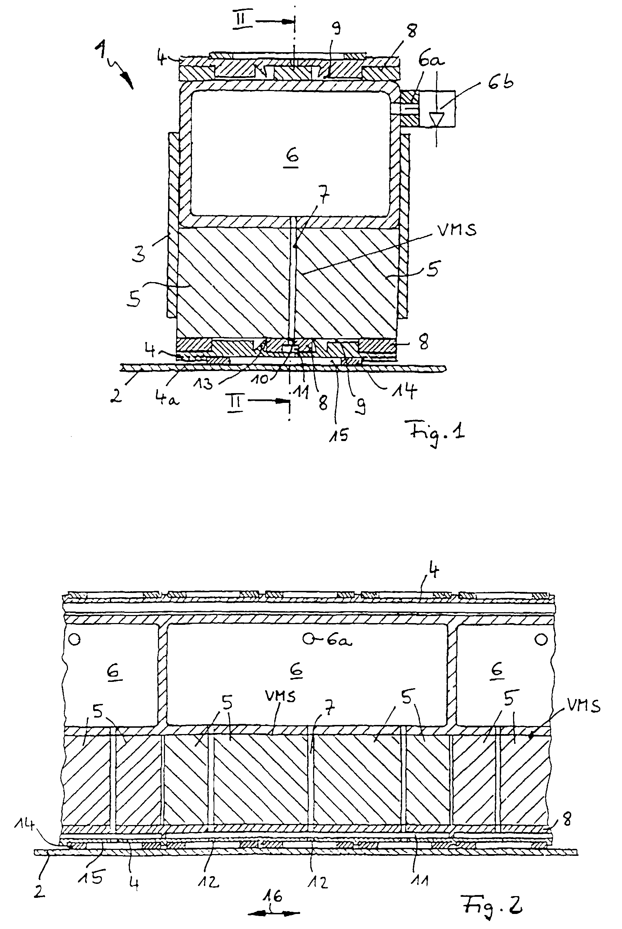

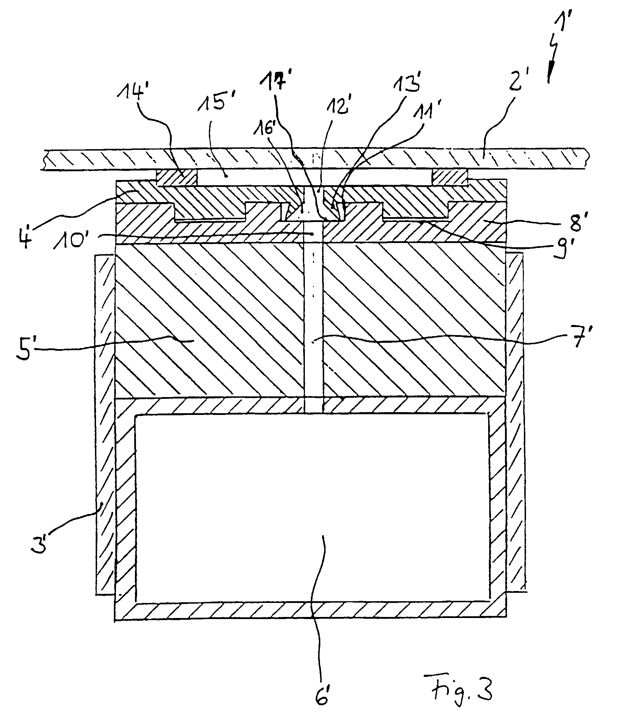

Die Vorrichtung 1 weist einen Transportbandkörper 3 auf, um den ein als Zahnriemen 4 ausgebildetes Transportband umläuft, an dem die Gegenstände 2 zum Transport unterseitig anliegen. Die Transport- bzw. Förderrichtung befindet sich dabei senkrecht zur Darstellung in Fig. 1 und ist durch einen Doppelpfeil 16 in Fig. 2 angedeutet.

In den Transportbandkörper ist eine Einrichtung zum Festhalten der Gegenstände 2 an der Oberfläche des Zahnriemens 4 integriert. Diese Einrichtung zum Festhalten der Gegenstände ist dabei erfindungsgemäß von mehreren in Transportrichtung gesehen hintereinander angeordneten, kombinierten Vakuum-Magnet-Systemen VMS gebildet, welche den die Gegenstände 2 haltenden Bereich des Zahnriemens 4 beaufschlagen.

Jedes dieser hintereinander angeordneten Vakuum-Magnet-Systeme VMS weist zunächst einen benachbart zum Zahnriemen 4 angeordneten Magneten 5 und einen Vakuumkanal 6 auf, der über einen Vakuumanschluß 6a mit einer Vakuumquelle 6b verbunden ist. Jeder Vakuumkanal 6 steht über den zugehörigen Magneten 5 durchdringende Saugleitungen 7 mit dem Zahnriemen 4 in Verbindung, wie nachfolgend näher beschrieben wird. Je nach Gesamtförderlänge der Vorrichtung 1 sind hintereinander entsprechend eine Vielzahl von aus Magneten 5 und Vakuumkanal 6 bestehenden Vakuum-Magnet-Systemen VMS im Transportbandkörper 3 angeordnet, nur beispielhaft sind in Fig. 2 drei nebeneinander angeordnete derartige Systeme dargestellt.

Der Magnet 5 eines jeden Vakuum-Magnet-Systems ist unterseitig mit Führungsleisten 8 versehen, die Führungen 9 für den Zahnriemen 4 bilden. Die Führungsleisten 8 decken dabei die dem Zahnriemen 4 zugewandte untere Oberfläche des jeweiligen Magneten 5 zumindest teilweise ab und weisen im mittleren Bereich mit den Saugleitungen 7 in Verbindung stehende Saugöffnungen 10 auf. Diese Saugöffnungen 10 in den Führungsleisten 8 münden in wenigstens einen mittig in den Führungsleisten 8 vorgesehenen rinnenförmigen Ansaugkanal 11, der unterseitig von dem Zahnriemen 4 abgedeckt ist. Der Zahnriemen 4 weist in diesem mittleren, den jeweiligen rinnenförmigen Ansaugkanal 11 abdeckenden Bereich Ansaugöffnungen 12 auf, welche innenseitig mit Dichtlippen 13 versehen sind. Diese Dichtlippen 13 sind dabei so gestaltet, daß sie die innere, den rinnenförmigen Ansaugkanal 11 aufweisende Führungsleiste 8 randseitig dicht umschließen, so daß der rinnenförmige Ansaugkanal 11 der betreffenden Führungsleiste 8 mit Ausnahme der Saugöffnungen 10 und Ansaugöffnungen 12 dicht verschlossen ist.

Über seine Länge ist der Zahnriemen 4 auf seiner den Gegenständen 2 zugewandten Oberseite mit einer Mehrzahl von hintereinander angeordneten ringförmigen Erhebungen 14 versehen, an denen die Gegenstände 2 anliegen und welche in Verbindung mit den Ansaugöffnungen 12 des Zahnriemens 4 Haltekammern 15 für die Gegenstände 2 bilden.

Die Funktionsweise der Vorrichtung 1 ist die folgende:

Zur Aktivierung der Vakuum-Systeme VMS wird die Vakuumquelle 6b gestartet, so daß über die Vakuumanschlüsse 6a, die getrennt voneinander geöffnet oder geschlossen werden können, entweder alle oder nur ausgewählte Vakuumkanäle 6 evakuiert werden. Über den jeweiligen Vakuumkanal 6, die Saugleitungen 7, die Saugöffnungen 10, die Ansaugöffnungen 12 und die ringförmigen Öffnungen 14 bildet sich somit in den Haltekammern 15 des zugehörigen Vakuum-Systems ein Unterdruck, der die zu transportierenden Gegenstände 2 in diesem Bereich an die Oberfläche des Zahnriemens 4 ansaugt. Diese Ansaugung wird bei ferromagnetischen Gegenständen 2 zusätzlich noch durch den Magneten 5 des zugehörigen Magnet-Vakuum-Systems und die damit verbundenen Führungsleisten 8 unterstützt, die bei ferromagnetischen Gegenständen zu einem zusätzlichen Festhalten derselben an der Oberfläche des Zahnriemens 4 beitragen. Der Zahnriemen 4 selbst ist bevorzugt mit ferromagnetischen Einlagen 4a versehen, so daß er durch die Magnete 5 angezogen wird und ein Durchhängen desselben verhindert wird.

Aufgrund des Aufbaus der Vakuum-Systeme mit der Gestaltung der Dichtlippen 13 an der Innenseite des Zahnriemens 4 in Verbindung mit den rinnenförmigen Ansaugkanälen 11 der Führungsleisten 8 und den Haltekammern 15 in Verbindung mit den daran anliegenden Gegenständen 2 entsteht bei Einschalten des Vakuums im jeweiligen Vakuum-System eine selbsthaltende Vakuumabdichtung, deren Reibkräfte beherrschbar bleiben und weitgehend unabhängig von der Zahl der mit Gegenständen 2 geschlossenen Vakuumkammern 15, sofern diese zum selben Vakuum-System gehören.

Durch die Möglichkeit, einzelne Magnet-Vakuum-Systeme VMS zu aktivieren bzw. zu deaktivieren, ist es möglich, mit ein und derselben Vorrichtung 1 gleichzeitig Gegenstände 2 hängend zu transportieren und andere Gegenstände in einem anderen Bereich durch Aktivierung bzw. Deaktivierung des jeweiligen Vakuum-Magnet-Systems anzuheben bzw. positionsgenau abzulegen.

Die Vorrichtung eignet sich außerdem natürlich für jeden hängenden Transport, d.h. die Gegenstände können seitlich am Transportband anliegen und in beliebigen anderen Winkelpositionen.

In Fig. 3 ist eine Vorrichtung zum aufliegenden Transport von flachen, insbesondere plattenförmigen Gegenständen, wie Blechen, dargestellt und in der Zeichnung allgemein mit 1' bezeichnet. Ein blechförmiger Gegenstand ist teilweise dargestellt und mit 2' bezeichnet.

Die Vorrichtung 1' weist einen Transportbandkörper 3' auf, um den ein als Zahnriemen 4' ausgebildetes Transportband umläuft, auf dem die Gegenstände 2' zum Transport aufliegen. Die Transport- bzw. Förderrichtung befindet sich dabei senkrecht zur dargestellten Zeichnungsebene.

In den Transportbandkörper 3' ist eine Einrichtung zum Ausüben einer Kraft auf die Gegenstände 2' gegen die Oberfläche des Zahnriemens 4' integriert. Diese Einrichtung zum Ausüben einer Kraft auf die Gegenstände gegen die Transportbandoberfläche ist dabei erfindungsgemäß von einem kombinierten Vakuum-Magnet-System gebildet, welches den die Gegenstände 2' tragenden Bereich des Zahnriemens 4' beaufschlagt.

Dieses Vakuum-Magnet-System weist zunächst wenigstens einen benachbart zum Zahnriemen 4' angeordneten Magneten 5' und einen mit einer nicht dargestellten Vakuumquelle verbundenen Vakuumkanal 6' auf, der über den Magneten 5' durchdringende Saugleitungen 7' mit dem Zahnriemen 4' in Verbindung steht, wie nachfolgend näher beschrieben ist.

Der wenigstens eine Magnet 5' ist oberseitig mit Führungsleisten 8' versehen, die Führungen 9' für den Zahnriemen 4' aufweisen. Die Führungsleisten 8' decken dabei die dem Zahnriemen 4' zugewandte Oberfläche des Magneten 5' ab und weisen mit den Saugleitungen 7' in Verbindung stehende Saugöffnungen 10' auf. Diese Saugöffnungen 10' in den Führungsleisten 8' münden in wenigstens einen mittig in den Führungsleisten 8' vorgesehenen rinnenförmigen Ansaugkanal 11', der unterseitig mit einer Dichtfläche 17' versehen ist und oberseitig von dem Zahnriemen 4' abgedeckt ist. Der Zahnriemen 4' weist im mittleren Bereich Ansaugöffnungen 12' auf, die zwecks Begrenzung der Leckage, vor allem bei nicht mit Blechen abgedeckten Haltekammern 15', und zum Ansaugen und damit Abdichten des Zahnriemens 4' auf der Führungsleiste 8' als Drossel gestaltet sind. Am Zahnriemen 4' sind an der Unterseite längs durchgehende Dichtlippen 13' angeordnet, die endseitig an der Dichtfläche 17' anliegen und somit einen längs durchgehenden Verteilerkanal 16' ausbilden, über dem das kontinuierliche Absaugen während der Zahnriemenbewegung erfolgt.

Über seiner Länge ist der Zahnriemen 4' auf seiner den Gegenständen 2' zugewandten Oberseite mit einer Mehrzahl von hintereinander angeordneten ringförmigen Erhebungen 14' versehen, auf denen die Gegenstände 2' aufliegen und welche in Verbindung mit den Ansaugöffnungen 12' des Zahnriemens Haltekammern 15' für die Gegenstände 2' bilden.

Die Funktionsweise der Vorrichtung 1' ist die folgende:

Zur Aktivierung des Vakuum-Systems wird die nicht dargestellte Vakuumquelle gestartet, so daß sich über dem Vakuumkanal 6', die Saugleitungen 7', die Saugöffnungen 10', die Ansaugöffnungen 12' und die ringförmigen Öffnungen 14' in den Haltekammern 15' ein Unterdruck bildet, der die zu transportierenden Gegenstände 2' an die Oberfläche des Zahnriemens 4' drückt bzw. saugt. Diese Andrückung wird bei ferromagnetischen Gegenständen 2' zusätzlich noch durch die Magneten 5' und die damit verbundenen Führungsleisten 8' unterstützt, die bei ferromagnetischen Gegenständen 2' zu einer zusätzlichen Andrückung derselben an die Oberfläche des Zahnriemens 4' beitragen. Aufgrund des Aufbaus des Vakuum-Systems mit der Gestaltung der Dichtlippen 13' an der Unterseite des Zahnriemens 4' in Verbindung mit den rinnenförmigen Ansaugkanälen 11' der Führungsleisten 8' und den Haltekammern 15' in Verbindung mit den darauf befindlichen Gegenständen 2' entsteht bei Einschalten des Vakuums eine selbsthaltende Vakuumabdichtung, deren Reibkräfte beherrschbar bleiben und weitgehend unabhängig von der Zahl der mit Gegenständen 2' geschlossenen Vakuumkammern 15' sind, d.h. die Funktionsweise der Vorrichtung ist auch dann gewährleistet, wenn der Zahnriemen 4' nicht über seiner gesamten Länge mit Gegenständen 2' bedeckt ist.

Durch die Konstruktion der Einrichtung zum Ausüben von Kräften (Magnet-Vakuum-System) lassen sich hohe Transportgeschwindigkeiten und insbesondere auch ausgesprochen hohe Beschleunigungen erzielen. Dazu wird der Zahnriemen 4' in nicht dargestellter üblicher Weise mit einem geeigneten Antrieb angetrieben.

Je nach den Eigenschaften der zu transportierenden Gegenstände 2' können beim Transport sowohl das jeweilige Magnetals auch das jeweilige Vakuum-System aktiviert sein, grundsätzlich ist es aber auch möglich, diese getrennt voneinander zu aktivieren, wenn dies im Einzelfall ausreicht. Es versteht sich darüber hinaus von selbst, daß zum Transport von größeren Gegenständen mehrere Vorrichtungen der beschriebenen Art nebeneinander angeordnet sein können und dergl. mehr.

## Patentansprüche

1. Vorrichtung zum Transport von flachen, insbesondere plattenförmigen Gegenständen (2, 2') mit einem um einen Transportbandkörper (3, 3') umlaufenden, angetriebenen Transportband (4, 4'), an dem die Gegenstände (2, 2') beim Transport anliegen, wobei das Transportband (4, 4') mit von einem Vakuum-System mit Vakuum beaufschlagbaren Ansaugöffnungen versehen ist und das Vakuum-System in wenigstens ein kombiniertes Vakuum-Magnet-System (VMS) integriert ist, welches im Transportbandkörper (3, 3') angeordnet ist, wobei jedes Vakuum-Magnet-System (VMS) wenigstens einen benachbart zum Transportband (4, 4') angeordneten Magneten (5, 5') und einen mit einer Vakuumquelle verbundenen Vakuumkanal (6, 6') aufweist, welcher mit den Ansaugöffnungen des Transportbandes (4, 4') in Verbindung steht,
dadurch gekennzeichnet,
daß der wenigstens eine Magnet (5, 5') auf der den zu transportierenden Gegenständen (2, 2') abgewandten Rückseite des Transportbandes (4, 4') zwischen dem Vakuumkanal (6, 6') und dem Transportband (4, 4') angeordnet und mit Führungen (9, 9') für das Transportband (4, 4') versehen ist, wobei der Vakuumkanal (6, 6') über den Magneten (5, 5') durchdringende Saugleiten (7, 7') mit den Ansaugöffnungen des Transportbandes (4, 4') in Verbindung steht.

2. Vorrichtung nach Anspruch 1,
dadurch gekennzeichnet,
daß mehrere in Transportrichtung gesehen hintereinander angeordnete Vakuum-Magnet-Systeme (VMS) vorgesehen sind.

3. Vorrichtung nach Anspruch 1 oder 2,
dadurch gekennzeichnet,
daß der wenigstens eine Magnet (5, 5') mit Führungsleisten (8, 8') versehen ist, die die Führungen (9, 9') für das Transportband (4, 4') bilden.

4. Vorrichtung nach Anspruch 3,
dadurch gekennzeichnet,
daß die Führungsleisten (8, 8') die dem Transportband (4, 4') zugewandte Oberfläche des Magneten (5, 5') abdecken und mit den Saugleitungen (7, 7') verbundene Saugöffnungen (10, 10') aufweisen.

5. Vorrichtung nach Anspruch 3 oder 4,
dadurch gekennzeichnet,
daß das Transportband von wenigstens einem vorzugsweise mit ferromagnetischen Einlagen (4a) versehenen Zahnriemen (4, 4') gebildet ist, der in den entsprechend gestalteten Führungsleisten (8, 8') geführt ist.

6. Vorrichtung nach Anspruch 5,
dadurch gekennzeichnet,
daß die Führungsleisten (8, 8') wenigstens einen rinnenförmigen, mit einer Dichtfläche (17) versehenen Ansaugkanal (11, 11') aufweisen, welcher von dem in diesem Bereich Ansaugöffnungen (12, 12') aufweisenden Zahnriemen (4, 4') abgedeckt ist.

7. Vorrichtung nach Anspruch 6,
dadurch gekennzeichnet,
daß die Ansaugöffnungen (12, 12') des Zahnriemens (4, 4') innenseitig mit Dichtlippen (13, 13') versehen sind, die den rinnenförmigen Ansaugkanal (11, 11') der Führungsleisten (8, 8') randseitig dichtend abdecken.

8. Vorrichtung nach Anspruch 6 oder 7,
dadurch gekennzeichnet,
daß der Zahnriemen (4, 4') auf seiner den Gegenständen (2, 2') zugewandten Seite mit einer Mehrzahl von hintereinander angeordneten ringförmigen Erhebungen (14, 14') versehen ist, an denen die Gegenstände (2, 2') anliegen und welche in Verbindung mit den Ansaugöffnungen (12, 12') des Zahnriemens (4, 4') Haltekammern (15, 15') für die Gegenstände (2, 2') bilden.

9. Vorrichtung nach Anspruch 7 oder einem der folgenden,
dadurch gekennzeichnet,
daß die Dichtlippen (13, 13') derart ausgebildet sind, daß sie einen Verteilerkanal (16, 16') bilden, über den die mit dem Zahnriemen (4, 4') beweglichen Ansaugöffnungen (12, 12') mit den stationären Saugöffnungen (10, 10') kontinuierlich verbunden sind.

10. Vorrichtung nach Anspruch 6 oder einem der folgenden,
dadurch gekennzeichnet,
daß die Ansaugöffnungen (12, 12') als Drosseln ausgebildet sind.

## Claims

1. Apparatus for transporting flat, in particular plate-shaped objects (2. 2'), having a driven conveyor belt (4, 4') which runs around a conveyor belt body (3, 3') and on which the objects (2. 2') bear during transport, wherein the conveyor belt (4, 4') is provided with suction openings which can be acted upon by vacuum from a vacuum system, and the vacuum system is integrated into at least one combined vacuum-magnet system (VMS) which is arranged in the conveyor belt body (3, 3'), wherein each vacuum-magnet system (VMS) has at least one magnet (5, 5') arranged adjacent to the conveyor belt (4, 4') and a vacuum duct (6, 6') which is connected to a vacuum source and which communicates with the suction openings of the conveyor belt (4, 4'), characterised in that the at least one magnet (5, 5') is arranged on the rear side of the conveyor belt (4, 4') which is remote from the objects (2, 2') to be transported, between the vacuum duct (6, 6') and the conveyor belt (4, 4'), and is provided with guides (9, 9') for the conveyor belt (4, 4'), wherein the vacuum duct (6, 6') communicates with the suction openings of the conveyor belt (4, 4') by way of suction conduits (7, 7') which pass through the magnet (5, 5').

2. Apparatus according to claim 1 characterised in that there are provided a plurality of vacuum-magnet systems (VMS) which are arranged in succession in the direction of transoort.

3. Apparatus according to claim 1 or claim 2 characterised in that the at least one magnet (5, 5') is provided with guide bars (8, 8') forming the guides (9, 9') for the conveyor belt (4, 4').

4. Apparatus according to claim 3 characterised in that the guide bars (8, 8') cover over the surface of the magnet (5, 5'), that is towards the conveyor belt (4, 4'), and have suction openings (10, 10') connected to the suction conduits (7, 7').

5. Apparatus according to claim 3 or claim 4 characterised in that the conveyor belt is formed by at least one toothed belt (4, 4') which is preferably provided with ferromagnetic inserts (4a) and which is guided in the guide bars (8, 8') of suitable configuration.

6. Apparatus according to claim 5 characterised in that the guide bars (8. 8') have at least one channel-shaped suction passage (11, 11') which is provided with a sealing surface (17) and which is covered by the toothed belt (4, 4') which has suction openings (12, 12') in that region.

7. Apparatus according to claim 6 characterised in that the suction openings (12, 12') of the toothed belt (4. 4') are provided on the inside with sealing lips (13, 13') which sealingly cover at the edges the channel-shaped suction passage (11, 11') of the guide bars (8, 8').

8. Apparatus according to claim 6 or claim 7 characterised in that on its side towards the objects (2, 2') the toothed belt (4, 4') is provided with a plurality of successively arranged annular raised portions (14, 14') on which the objects (2, 2') bear and which in conjunction with the suction openings (12, 12') of the toothed belt (4, 4') form holding chambers (15, 15') for the objects (2, 2').

9. Apparatus according to claim 7 or one of the following claims characterised in that the sealing lips (13, 13') are of such a configuration that they form a distributor passage (16, 16'), by way of which the suction openings (12, 12') which are movable with the toothed belt (4, 4') are continuously connected to the stationary suction openings (10, 10').

10. Apparatus according to claim 6 or one of the following claims characterised in that the suction openings (12, 12') are in the form of throttle means.

## Revendications

1. Dispositif pour transporter des objets plats (2,2'), notamment en forme de plaques, comportant une bande transporteuse entraînée (4,4'), qui circule autour d'un corps (3,3') de la bande transporteuse, dans lequel la bande transporteuse (4,4') est équipée d'ouvertures d'aspiration qui peuvent être chargées par une dépression au moyen d'un système de création de dépression, et le système de création de dépression est intégré dans au moins un système à dépression - aimant combiné (VMS), qui est disposé dans le corps (3,3') de la bande transporteuse, et dans lequel chaque système à dépression - aimant (VMS) comprend au moins un aimant (5,5') disposé au voisinage de la bande transporteuse (4,4'), et un canal à dépression (6,6') qui est relié à une source de dépression et est raccordé aux ouvertures d'aspiration de la bande transporteuse (4,4'), caractérisé en ce
que le au moins un aimant (5,5') est disposé sur la face arrière, tournée à l'opposé des objets à transporter (2,2'), de la bande transporteuse (4,4') entre le canal à dépression (6,6') et la bande transporteuse (4,4') et est équipé de guides (9,9') pour la bande transporteuse (4,4'), le canal à dépression (6,6') étant relié aux ouvertures de sortie de la bande transporteuse (4,4') par l'intermédiaire de conduites d'aspiration (7,7') qui traversent l'aimant (5,5').

2. Dispositif selon la revendication 1, caractérisé en ce
qu'il est prévu plusieurs systèmes à dépression - aimant (VMS) disposés les uns derrière les autres dans la direction de transport.

3. Dispositif selon la revendication 1 ou 2, caractérisé en ce
que le au moins un aimant (5,5') comporte des barrettes de guidage (8,8') qui forment les guides (9,9') pour la bande transporteuse (4,4').

4. Dispositif selon la revendication 3, caractérisé en ce
que les barrettes de guidage (8,8') recouvrént la surface de l'aimant (5,5') qui est tournée vers la bande transporteuse (4,4'), et comportent des ouvertures d'aspiration (10,10') reliées aux conduites d'aspiration (7,7').

5. Dispositif selon la revendication 3 ou 4, caractérisé en ce
que la bande transporteuse est formée d'au moins une courroie dentée (4,4'), qui est pourvue d'inserts ferromagnétiques (4a) et est guidée dans les barrettes de guidage (8,8') agencées de façon correspondante.

6. Dispositif selon la revendication 5, caractérisé en ce
que les barrettes de guidage (8,8') comportent au moins un canal d'aspiration (11,11') en forme de goulotte, qui est pourvu d'une surface d'étanchéité (17) et est recouvert par la courroie dentée (4,4') possédant des ouvertures d'aspiration (12,12') dans cette zone.

7. Dispositif selon la revendication 6, caractérisé en ce
que les ouvertures d'aspiration (12,12') de la courroie dentée (4,4') sont pourvues intérieurement de lèvres d'étanchéité (13,13'), qui recouvrent d'une manière étanche, au niveau des bords, le canal d'aspiration en forme de goulotte (11,11') des barrettes de guidage (8,8').

8. Dispositif selon la revendication 6 ou 7, caractérisé en ce
que la courroie dentée (4,4') comporte, sur sa face tournée vers les objets (2,2'), une multiplicité de renflements annulaires (14,14'), qui sont disposés les uns derrière les autres et contre lesquels les objets (2,2') s'appliquent et qui, en liaison avec les ouvertures d'aspiration (12,12') de la courroie dentée (4,4'), forment des chambres de retenue (15,15') pour les objets (2,2').

9. Dispositif selon la revendication 7 ou des suivantes, caractérisé en ce
que les lèvres d'étanchéité (13,13') sont agencées de telle sorte qu'elles forment un canal de répartition (16,16'), au moyen duquel les ouvertures d'aspiration (12,12') qui sont mobiles avec la courroie dentée (4,4') sont reliées continûment aux ouvertures fixes d'aspiration (10,10').

10. Dispositif selon la revendication 6 ou l'une des suivantes, caractérisé en ce
que les ouvertures d'aspiration (12,12') sont agencées sous la forme d'étranglements.
